Europäisches Patentamt

European Patent Office

Office européen des brevets

(11) Publication number: **0 243 846**
**A2**

## EUROPEAN PATENT APPLICATION

(21) Application number: 87105826.9

(22) Date of filing: 21.04.87

(51) Int. Cl.⁴: **C02F 1/46** , C02F 1/76

(30) Priority: 29.04.86 GB 8610479

(43) Date of publication of application:
**04.11.87 Bulletin 87/45**

(84) Designated Contracting States:
**AT BE CH DE ES FR GB GR IT LI NL SE**

(71) Applicant: **Laporte Industries Limited**
**Hanover House 14 Hanover Square**
**London W1R 0BE(GB)**

(72) Inventor: **Smith, Alan**
**Merle Bank Roughlow Willington**
**Tarporley Cheshire, CW6 OPG(GB)**
Inventor: **Lewis, Richard Keith**
**31 Leofric Close Kings Bromley**
**Burton on Trent Staffordshire DE13 7JP(GB)**

(74) Representative: **ffrench-Lynch, Cecil et al**
**Laporte Industries Ltd., Group Patent**
**Department, P.O. Box 2, Moorfield Road**
**Widnes, Cheshire WA8 OJU(GB)**

(54) Process and apparatus for the disinfection of water.

(57) Water is disinfected by dissolving a bromide, for example sodium bromide, in the water and subjecting the resulting solution to the action of an operative electrolytic cell to generate bromine therein. If a combination of bromide and chloride is dissolved in the water the production of bromine proceeds non-electrochemically, under the oxidising influence of the chlorine generated by means of the cell and the chloride is regenerated.

These techniques are particularly suitable for the disinfection of swimming pools.

EP 0 243 846 A2

## Process and apparatus for the disinfection of water.

This invention relates to a process and apparatus for the disinfection of water and particularly, but not exclusively, for the disinfection of pools.

The term 'pool' is used herein to indicate a defined body of water for human recreational, sporting, therapeutic or like uses and includes swimming pools, leisure pools, paddling pools, spa pools and the like.

Water, for example in pools may be subject to a considerable degree to contamination by organisms such as bacteria and amoebae deriving from the users of the pool and by algae. If unhindered the concentration of such organisms tends to increase due both to the cumulative effect of usage and to natural multiplication in the benign conditions applying and can represent a threat to users due to the possibility of cross-infection. A further effect of a high concentration of organic matter is a decrease in the clarity of the water which can increase the problems of pool supervision as well as being aesthetically unpleasing.

A variety of methods have been in use for the disinfection of pools to reduce or minimise the concentration of contaminating organisms therein.

The traditional method for the disinfection of pools involved the addition of gaseous chlorine to the water. This had the advantage of relative simplicity and economy of operation but in view of the possibility of operator accidents due to the leakage of chlorine it is no longer recommended by the public health authorities of certain countries except for certain applications where technical considerations may require it.

Chlorine-containing compounds, for example the chlorinated isocyanurates or the alkali metal or alkaline earth metal hypochlorites, have also been used as disinfectants for pools. These compounds may be added as such or as aqueous solutions or, in the case of sodium hypochlorite, may be generated electrochemically 'in situ' from a saline solution.

There is a tendency for a part of the chlorine values of chlorine-containing compounds to react with nitrogenous contaminants in pool water to give inactive by-products. This decreases the cost effectiveness of such compounds.

Liquid bromine has proved to be very effective in pool disinfection, forming hypobromite 'in situ' and not producing the same proportion of inactive by-products as do chlorine-containing compounds. Additionally some by-products which are formed when bromine is used, the bromamines, are believed to have a disinfecting action in their own right. Liquid bromine, however, is an unpleasant material to utilise and requires the use of stringent operator safety precautions. Liquid bromine is at its most effective at a slightly higher pH level than are the chlorine-containing disinfectants.

Recently, bromochlorodimethylhydantoin has been used as a pool disinfectant but this compound tends to be relatively expensive on an active disinfectant basis and also requires the taking of stringent operator safety precautions.

The present invention provides a new or improved method for the disinfection of water which utilises hypobromite as the active disinfecting agent.

According to one aspect thereof the present invention comprises a process for disinfecting water comprising dissolving in the water to be disinfected a bromine salt, and subjecting water containing the dissolved bromide to the action of an operative electrolytic cell so as to generate hypobromite therein. It is understood that the formation of hypobromite and hypochlorite in electrolytic cells may be preceded by the generation of bromine and chlorine ions and references to hypobromite or hypochlorite generation are to be construed accordingly. It is also understood that the disinfection of water by mixing with it water containing or hypobromite generated as last described above is within the scope of the present invention. This method has the great advantage of involving the handling only of the relatively safe bromide salts which do not require the taking of such stringent safety precautions as does, for example, liquid bromine. Hypobromite is an exremely effective disinfectant in the pool environment.

It is understood that the bromide utilised according to this invention may be any alkali metal, alkaline earth metal or ammonium bromide although it is preferred to utilise sodium bromide.

The particular mode of generating bromine and the installation for so doing may be varied. According to one advantageous embodiment of the invention the bromide may be added to the main body of water, preferably at a concentration of 0.0005% to 5.0% by weight, for example at a concentration of from 0.05% to 4% by weight and a proportion of the water withdrawn, continuously or discontinuously, passed to an electrolytic cell facility and returned to the main body of water. According to a further advantageous embodiment of the invention the bromide may be added, in similar or higher concentrations, only to a proportion of the water. According to such an embodiment the water may either be withdrawn from the main body of water for this purpose or may be make-up water and the electrolytic cell facility may be sited adjacent to, or even at a distance from the said main body of water. In cases where water which has been in pool use is to be passed to the electrolytic cell facility the cell or the feed therefrom is preferably, but not necessarily, situated upstream of pool filter means so as to disinfect the filter means.

The electrolytic cell facility may advantageously comprise one or more holding or storage tanks, a tank for water while in the course of electrochemical treatment connected to the said holding or storage tanks, an electrolytic cell connected to the treatment tank, the requisite valves and pump to control flows and a process controller which is preferably electronic. Suitably, for example, such a facility may be operated by continuously or semi-continuously cycling liquid containing dissolved bromide between the treatment tank and the electrolytic cell to build up a suitable level of hypobromite, therein, taking off liquid containing the said suitable level of hypobromite from the treatment tank either into a holding tank or into the main body of water to be treated, making up the level of liquid in the treatment tank from a storage tank containing water to be treated containing dissolved bromide. The flows required may suitably be automatically controlled in response to information from liquid level monitors and preset instructions as the treatment level required.

Suitably the electrolytic cell may be a single compartment cell containing plate or cylindrical electrodes. Preferably the anode is of the dimensionally stable type very suitably comprising a titanium or tantalum support bearing a coating of platinum or ruthenium metal, or oxides thereof, or of other suitable platinum group metals or oxides. Preferably the cathode is of steel, or of a suitable alloy, for example that available under the Trade name Hastalloy, or a similar material.

The cell may be powered by a direct current of about 8 to 20 amperes, or more preferably 10 to 15 amperes which current is preferably reversible at suitable intervals to reduce deposition on the electrodes. The operation of the electrolytic cell gives rise to the generation of hydrogen and the design of the cell should incorporate normal design precautions to prevent any substantial build up of hydrogen or flow of hydrogen back to the filter unit. Preferably the hydrogen is passed with the hypobromite-containing solution into the pool water or is vented to the atmosphere.

According to a further and separate aspect thereof the present invention provides a process for the generation of hypobromite, for example for the disinfection of water, comprising dissolving in water a mixture of bromide and chloride and subecting the water containing the mixture of salts to the action of an operative electrolytic cell.

The last above mentioned aspect of the invention utilises a non-electrochemical mechanism for the production of molecular bromine by the reaction of bromide ions with molecular chlorine to produce molecular bromine and to regenerate chloride, which non-electrochemical mechanism is driven by the electrochemical production of the molecular chlorine. This dual mechanism method for the production of molecular bromine, which converts in situ into hypobromite, for pool disinfection purposes, is novel and particularly effective. Since the chlorine values cycle between the $Cl_2$ and $2Cl^-$ states the use of a single addition of chloride, corresponding to the concentration of broomide existing in the system on a molar basis, is sufficient to drive a process to which bromide is added continuously or discontinuously. For example, a single addition of chloride to the main body of water to be disinfected will result in the dual mechanism being operable when portions of that water are removed for bromide addition and electrochemical treatment. Alternatively a single addition of chloride to a quantity of make-up water will suffice to enable the treatment of that water by successive additions of bromide with repeated intervening recycling through an electrochemical cell to build up a desired concentration of molecular bromine/hypobromite therein. There may of course be accompanying hypochlorite generation if an excess of chloride is used so that the resulting disinfecting solution would be a mixed hypochlorite/hypobromite solution containing hypochlorite at a level depending on the relative contents of bromide and chloride in the solution. Such hypochlorite contents may vary from about 500 parts per million by weight (ppm) to, for example, 3000 to 10,000 ppm of available hypochlorite measured as Cl.

The molar ratio of bromide to chloride is preferably from 1:4 to 4:1 particularly preferably from 1:3 to 3:1 for example, very suitably, from 1:2 to 2:1. The chloride may be selected from alkali metal, alkaline earth metal or ammonium salts. Preferably, however, both chloride and bromide are the sodium salts.

The invention will now be illustrated by reference to the following Examples which were conducted on a laboratory scale to demonstrate the feasibility of generating disinfecting concentrations of bromine electrolytically.

Examples

In both examples a Cogen EC200 electrolytic cell facility was used. In Example I 40 I of a 3% by weight sodium bromide solution was electrolysed. In Example 2 the same total volume of a 3% by weight sodium bromide solution to which had been added an equimolar amount of sodium chloride was electrolysed. These solutions were cycled through the electrolytic cell continuously at a rate of about 5 litres per minute. The following Table shows the results of analysis of solution samples, taken at hourly intervals for the first 5 hours of operation, for available bromine, expressed as parts per million of solution.

| Time Hours | Example 1 | Example 2 |
|---|---|---|
| 1 | 340 | 450 |
| 2 | 450 | 1125 |
| 3 | 850 | 1687 |
| 4 | 1125 | 2250 |
| 5 | 1700 | 2250 |

There was no molecular chlorine present in the samples from Example 2 so it is deduced that it reacted with bromide ions immediately on generation.

In the practice of this invention this procedure may be continued, for example for up to 10 hours or up to 24 hours to generate a high concentration of available bromine in water to be used for dosing a main body of water. Such a concentration may suitably lie in the range 1500 to 10,000 ppm available Br.

**Claims**

1. A process for disinfecting water by introducing a source of hypobromite therein characterised in that the source of hypobromite is provided by dissolving a bromide in water and subjecting the water to the action of an operative electrolytic cell.

2. A process as claimed in claim I wherein the concentration of bromide in the water passed into the electrolytic cell is from 0.0005% to 5.0% by weight.

3. A process as claimed in claim I or 2 wherein the water containing bromide is subjected to the action of the electrolytic cell until it contains a level of hypobromite, measured as parts by weight per million Br, of at least 1000.

4. A process as claimed in claim 3 wherein the said level is from 2000 to 10,000.

5. A process for disinfecting water by introducing a quantity of water containing hypobromite therein into the water to be disinfected characterised in that the hypobromite is generated by dissolving a bromide and a chloride in the quantity of water and subjecting the quantity of water containing the resulting mixture of dissolved salts to the action of an operative electrolytic cell.

6. A process as claimed in claim 5 wherein the molar ratio of bromide to chloride is from I:4 to 4:I.

7. A process as claimed in claim 6 wherein the said molar ratio is I:2 to 2:I.

8. A process as claimed in any one of claims 5 to 7 wherein the chlorine salt and the bromine salt are both the sodium salt.

9. An aqueous solution of hypobromite suitable for addition to a body of water to disinfect the same containing electrolytically generated hypobromite.

10. A solution as claimed in claim 9 containing both hypobromite and a chloride.

11. A solution as claimed in claim 10 wherein the solution additionally contains hypochlorite.

12. A solution as claimed in claim II wherein the level of hypobromite is from 1500 to 10,000 ppm and the level of hypochlorite is from 500 ppm to 10,000 ppm as Br and Cl respectively.

13. A process for disinfecting water comprising adding to it water containing chloride together with from 1500 to 10,000 ppm of hypobromite and from 500 ppm to 10,000 ppm of hypochlorite as Br and Cl respectively.